# EUROPÄISCHE PATENTSCHRIFT

(11) **EP 1 964 648 B1**
(45) Veröffentlichungstag und Bekanntmachung des Hinweises auf die Patenterteilung: **29.12.2010**
(21) Anmeldenummer: 07023716.9
(22) Anmeldetag: 07.12.2007
(51) Int. Cl.: B25F 5/00, B27B 9/04, B23D 47/02

(54) **Hand-Werkzeugmaschine mit einer Führungsplatte**
Manually operated machine tool with a guide plate
Machine-outil manuelle dotée d'une plaque de guidage

(30) Priorität: 02.03.2007 DE 102007010249
(43) Veröffentlichungstag der Anmeldung: 03.09.2008
(73) Patentinhaber: Festool GmbH, 73240 Wendlingen (DE)
(72) Erfinder: Randecker, Andreas, 72581 Dettingen an der Ems (DE)
(74) Vertreter: Bregenzer, Michael

(56) Entgegenhaltungen:
- EP-A- 0 496 047
- DE-U1- 20 017 862

## Beschreibung

Die Erfindung betrifft eine Hand-Werkzeugmaschine mit einer Führungsplatte zum Führen der Hand-Werkzeugmaschine an einem Führungsvorsprung einer ortsfesten Führungsvorrichtung, wobei der Führungsvorsprung bei dem Führen in einen Führungszwischenraum an der Führungsplatte eingreift, so dass die Hand-Werkzeugmaschine auf den Führungsvorsprung aufsetzbar und an dem Führungsvorsprung entlang zur Bearbeitung eines Werkstücks entlang führbar ist, wobei der Führungszwischenraum eine feststehende Führungswand und eine relativ zu der feststehenden Führungswand durch eine Verstelleinrichtung verstellbare Führungsfläche aufweist, so dass eine Breite des Führungszwischenraums zur Anpassung an eine Breite des Führungsvorsprungs einstellbar ist.

Aus dem Gebrauchsmuster DE 200 17 862 U1 ist eine derartige Hand-Werkzeugmaschine bekannt. Die Führungsplatte bildet eine Tragplatte für weitere Bauteile, insbesondere den Antrieb, der Hand-Werkzeugmaschine, beispielsweise einer Handkreissäge. Die Führungsplatte wird beispielsweise auf eine Führungsleiste, an der der Führungsvorsprung in der Art einer Schiene linear verläuft, aufgesetzt und zum Bearbeiten des Werkstückes, beispielsweise einer Platte, an den Führungsvorsprung entlanggeführt. Ein Führungsspiel zwischen dem Führungszwischenraum an der Führungsplatte der Hand-Werkzeugmaschine und dem Führungsvorsprung der Führungsleiste ist mit Hilfe einer Exzenteranordnung einstellbar. Im Exzenter ist in Richtung des Führungszwischenraumes ein Flachmaterialstück vorgelagert, das durch den Exzenter elastisch verformt wird. Somit ist das Führungsspiel einstellbar. Das Flachmaterialstück besteht aus Stahl oder Kunststoff und ist ebenfalls elastisch biegbar.

In der Praxis hat sich gezeigt, dass der Führungszwischenraum an der Führungsplatte mechanisch verhältnismäßig stark beansprucht wird. Die Führungsflächen des Führungszwischenraumes verschleißen, insbesondere im Bereich der Exzenterelemente zur Verstellung des Führungsspieles. Dann muss die Führungsplatte aufwändig ausgetauscht werden. Bei der Montage müssen relativ enge Montagetoleranzen eingehalten werden, damit eine exakte Werkstückbearbeitung möglich ist.

Aus EP 0 496 047 A1 geht eine Handkreissäge mit einer Grundplatte hervor, an der Führungsklötze angegossen oder angespritzt oder auch auswechselbar sind. Zur Befestigung der Führungsklötze werden Schnapp- oder Schraubverbindungen sowie Klebeverbindungen vorgeschlagen.

Es ist daher die Aufgabe der vorliegenden Erfindung, die Verschleißeigenschaften bei einer Führungsplatte einer Hand-Werkzeugmaschine der eingangs genannten Art zu verbessern.

Zur Lösung der Aufgabe ist eine Hand-Werkzeugmaschine gemäß der technischen Lehre des Anspruchs 1 vorgesehen.

Die Führungsvorrichtung muss nicht dauerhaft ortsfest sein, sondern sie wird beispielsweise auf ein Werkstück auf- oder angelegt. Die Führungsplatte kann aus einem verhältnismäßig weichen Material sein, beispielsweise Magnesium. Dennoch tritt kein oder nur ein sehr geringer Verschleiß auf, da das Gleitstück vorteilhaft optimierte Gleiteigenschaften hat und nicht oder wenig verschleißt. Wenn das Gleitstück dennoch einmal verschlissen ist, kann es gelöst und durch ein neues, unverbrauchtes Gleitstück ausgetauscht werden. Die Führungsplatte als solche, die aufwändiger zu montieren ist, kann an der Hand-Werkzeugmaschine verbleiben.

Das Gleitstück stellt eine feststehende Führungsfläche bereit, sodass mit Hilfe der verstellbaren Führungsfläche der Abstand im Führungszwischenraum auf ein gewünschtes Führungsspiel eingestellt werden kann. Die mechanische Belastung im Führungszwischenraum wird von dem austauschbaren Gleitstück abgefangen. Dabei ist es durchaus denkbar, dass das Gleitstück nicht vollständig hart ist sondern eine vorbestimmte elastische Verformbarkeit aufweist.

Das Gleitstück oder das Gleitwandungsteil haben mindestens einen oder mehrere Haken zum Verhaken mit einer Hakenaufnahme der Führungsplatte. Der Haken kann beispielsweise ein Schnapphaken, ein Rasthaken oder dergleichen sein. Der Haken ist nämlich vorzugsweise federnd. Es ist aber auch möglich, dass der Haken feststehend ist und an der Führungsplatte eine korrespondierende bewegliche oder federnde Hakenaufnahme angeordnet ist.

Die Hand-Werkzeugmaschine hat zweckmäßigerweise eines oder mehrere Gleitstücke. Ferner können mehrere verstellbare Führungsflächen vorgesehen sein. In jedem Fall ist es bevorzugt, dass jeder verstellbaren Führungsfläche eine durch ein erfindungsgemäßes Gleitstück bereitgestellte feststehende Führungsfläche gegenüberliegt.

Die Hand-Werkzeugmaschine ist vorzugsweise eine Säge, beispielsweise eine Kreissäge. Die Erfindung ist aber auch bei sonstigen Werkzeugmaschinen zur insbesondere schneidenden oder spanabhebenden Bearbeitung anwendbar, beispielsweise bei Oberfräsen, Stichsägen und dergleichen.

Der Gleitbereich bzw. das Gleitstück bilden zweckmäßigerweise eine Art Gleitbacke.

Das Gleitstück ist vorzugsweise werkzeuglos montierbar und demontierbar. Es ist aber denkbar, dass beispielsweise die Montage werkzeuglos ist, für die Demontage aber ein Werkzeug notwendig ist, beispielsweise ein Schraubendreher ein sonstiges Hebelwerkzeug.

Auch die verstellbare Führungsfläche ist zweckmäßigerweise durch ein auswechselbares Bauteil gebildet, nämlich durch ein Gleitwandungsteil. Auch dieses Gleitwandungsteil kann zweckmäßigerweise werkzeuglos montierbar und/oder demontierbar sein.

Bei dem Gleitstück und dem Gleitwandungsteil ist es jeweils zweckmäßig, dieses von unten her zu montieren, sodass das Gleitstück bzw. das Gleitwandungsteil durch Aufsetzen der Führungsplatte auf den Führungsvorsprung in die Festlegestellung gebracht wird. Ein unbeabsichtigtes Lösen der jeweiligen Gleit-Bauteile ist somit unwahrscheinlich.

Die Hakenaufnahme ist vorteilhafterweise an einer Oberseite der Führungsplatte offen oder seitlich offen, sodass der Haken zum Lösen von der Oberseite bzw. seitlich zugänglich ist, beispielsweise für den Finger eines Bedieners, für ein Werkzeug, z.B. einen Schraubendreher.

Das Gleitstück und/oder das Gleitwandungsteil sind zweckmäßigerweise mit Hilfe einer Rastverbindung oder mit Rastverbindungsmitteln an der Führungsplatte befestigbar. Die Rastmittel befassen Rastaufnahmen und Rastvorsprünge, wobei die Vorsprünge am Gleitstück bzw. dem Gleitwandungsteil und die zugehörigen Aufnahmen an der Führungsplatte angeordnet sein können oder umgekehrt. Das Gleitstück bzw. das Gleitwandungsteil sind sozusagen ohne Werkzeug einclipsbar. Es ist aber wie gesagt möglich, dass zum Lösen ein Werkzeug notwendig ist.

Das Gleitstück oder das Gleitwandungsteil sind zweckmäßigerweise zumindest partiell im Klemmsitz an der Führungsplatte gehalten. Insbesondere beim Gleitstück ist dies vorteilhaft, da dann die feststehende Führungswand mit geringem Spiel oder keinem Spiel ortsfest ist.

Das Gleitstück und das Gleitwandungsteil sind zweckmäßigerweise aus demselben Material, zumindest in ihrem jeweiligen Gleitbereich. Dadurch sind an beiden Seiten des Führungszwischenraumes gleiche Gleiteigenschaften und ein gleicher Verschleiß vorhanden.

Das Gleitstück oder das Gleitwandungsteil bestehen zweckmäßigerweise aus Kunststoff. Bevorzugt ist ein faserverstärkter Kunststoff. Ferner ist es möglich, den Kunststoff gleitmodifiziert auszugestalten, beispielsweise durch Beimischung von Teflon.

Der Kunststoff ist vorzugsweise ein abriebfester Kunststoff, z.B. POM (Polyoxyinethylen, auch Polyacetal oder Polyformaldehyd genannt). Auch Polyamid eignet sich als Kunststoff, z.B. PA6 GF30 = Polyamid 6 mit 30% Glasfaser. POM und Polyamid sind abriebfeste Kunststoffe mit hoher Formbeständigkeit bei Wärme und guter Zähigkeit auch bei Kälte.

Es ist auch möglich, das Gleitstück oder das Gleitwandungsteil mit einer Gleitbeschichtung zu versehen. Beispielsweise kann das Gleitstück ein Metallbauteil sein, das mit einer Teflonbeschichtung versehen ist.

Das Gleitwandungsteil kann, wie aus DE 200 17 862 U1 bekannt, beispielsweise auch ein Metallbauteil bzw. ein Flachmetallstück sein.

Das mindestens eine Gleitwandungsteil ist vorzugsweise biegeelastisch.

Es ist auch möglich, dass die verstellbare Führungsfläche unmittelbar durch ein beispielsweise exzentrisch gelagertes oder eine Exzentrität aufweisendes Dreh-Verstellelement gebildet ist. Der Außenumfang dieses Dreh-Verstellelementes kann die verstellbare Führungsfläche bereitstellen.

Das Gleitstück oder das Gleitwandungsteil haben zweckmäßigerweise einen zum Führungszwischenraum hin vorstehenden Gleitabschnitt. Das Gleitstück hat beispielsweise in Sicht von der Unterseite der Führungsplatte her gesehen eine U-förmige Gestalt. Von den U-Schenkeln steht zweckmäßigerweise seitlich jeweils ein Halteabschnitt zum Halten an der Führungsplatte vor, beispielsweise seitlich und/oder nach oben zur Oberseite der Führungsplatte hin.

Neben dem zum Führungszwischenraum hin vorstehenden Gleitabschnitt ist zweckmäßigerweise mindestens ein quer zum Gleitabschnitt verlaufender Stützanschlag vorhanden, der sich im montierten Zustand an einem Stützgegenanschlag an der Führungsplatte abstützt. Der Stützanschlag und der Stützgegenanschlag sind entgegen der Führungsbewegungsrichtung der Hand-Werkzeugmaschine an dem Führungsvorsprung orientiert, z.B. rechtwinkelig zu den Wänden am Führungszwischenraum. Somit werden Kräfte, die durch die Führung der Werkzeugmaschine an dem Führungsvorsprung entstehen durch die beiden Anschläge aufgenommen und wirken sich nicht auf die jeweiligen Befestigungsmittel des Gleitstücks oder des Gleitwandungsteils, beispielsweise auf Rast- oder Hakenverbindungsmittel, aus.

Das Gleitwandungsteil ist vorteilhaft elastisch durch einen Verdrängerkörper der Verstelleinrichtung verformbar. Der Gleitabschnitt des Gleitwandungsteils ist zweckmäßigerweise mit dem Verdrängerkörper korrespondierend gerundet, zumindest auf der dem Verdrängerkörper zugewandten Seite.

Die Führungsplatte hat verteilhafterweise eine Steckaufnahmetasche für einen Steckvorsprung des Gleitwandungsteils. Der Steckvorsprung ist in der Steckaufnahmetasche gleitend gelagert, sodass er abhängig von der elastischen Verformung durch das Verdrängerelement bzw. der Verdrängerkörper in die Steckaufnahmetasche gleiten kann. Das Gleitwandungsteil kann einseitig ortsfest festgelegt sein, beispielsweise durch eine Rast- und/oder Hakenverbindung. Auf der anderen Seite ist es in der vorgenannten Art gleitend gelagert, sodass das Gleitwandungsteil auf die Verdrängung durch den Verdrängerkörper mit Spiel reagieren kann. Prinzipiell wäre es auch denkbar, das Gleitwandungsteil zweiseitig gleitend zu lagern. Durch geeignete Geometrie der Steckaufnahmetaschen und der Steckvorsprünge des Gleitwandungsteils sollte dann allerdings gewährleistet sein, dass beim Verstellen durch den Verdrängerkörper die beiden Steckvorsprünge nicht aus den Steckaufnahmetaschen herausgelangen können.

Der Verdrängerkörper weist zweckmäßigerweise eine Exzentrität auf oder ist exzentrisch gelagert.

Der Verdrängerkörper ist vorteilhaft an einem Drehachsteil drehbar gelagert. Es versteht sich, dass auch ein linear verschieblicher Verdrängerkörper, ein Keilgetriebe oder dergleichen zur Einstellung des Führungsspiels in dem Führungsvorsprung vorteilhaft sein können.

Das Drehachsteil zur Lagerung des drehbaren Verdrängerkörpers ist vorteilhaft konisch. Der Verdrängerkörper wird vorteilhaft durch ein Spannteil an dem Drehachsteil gehalten, das den Verdrängerkörper zur Erzeugung eines Reibungswiderstandes gegen das Drehachsteil spannt. Beispielsweise ist das Drehachsteil ein Aufnahmedom. Der Verdrängerkörper hat zweckmäßigerweise eine ebenfalls korische Lagerausnehmung, die mit dem konischen Drehachsteil korrespondiert. Das Spannteil ist beispielsweise eine Klemmscheibe, die auf das Drehachsteil oder einen Vorsprung am Drehachsteil aufgepresst wird. Die Klemmscheibe ist zweckmäßigerweise aus Stahl, wobei auch Kunststoffe durchaus möglich sind.

Der Führungsvorsprung ist beispielsweise an einer Oberseite an einer Führungsschiene angeordnet, die mit ihrer Unterseite auf ein Werkstück auflegbar ist. Eine Seitenkante der Führungsschiene bildet beispielsweise eine Schnittkante für ein Sägeblatt der Werkzeugmaschine.

Nachfolgend wird ein Ausführungsbeispiel der Erfindung anhand der Zeichnung erläutert. Es zeigen:

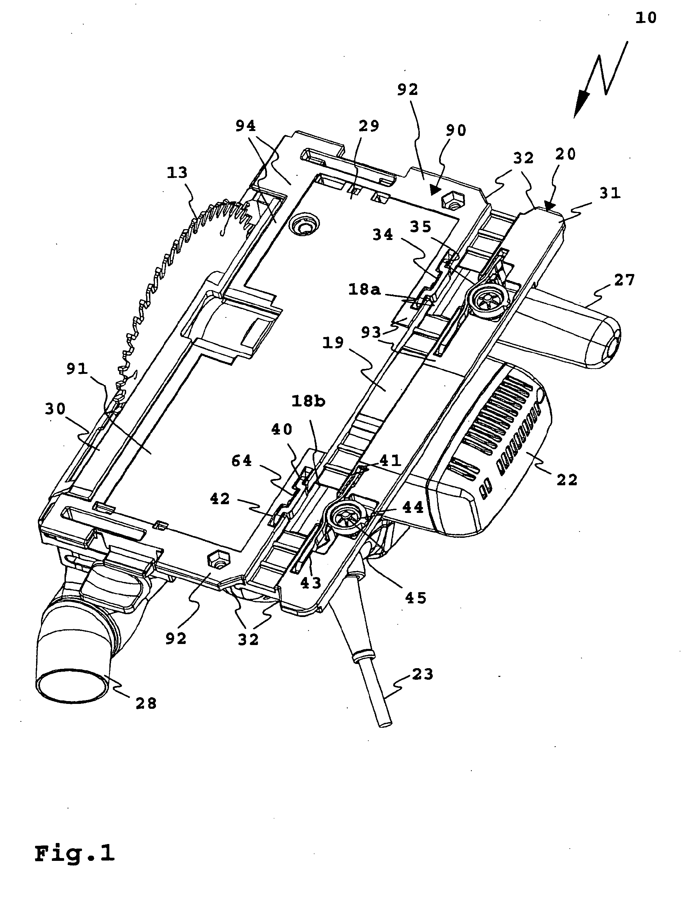

- Figur 1: eine perspektivische Ansicht, schräg von unten, ei- ner erfindungsgemäßen Hand-Werkzeugmaschine,

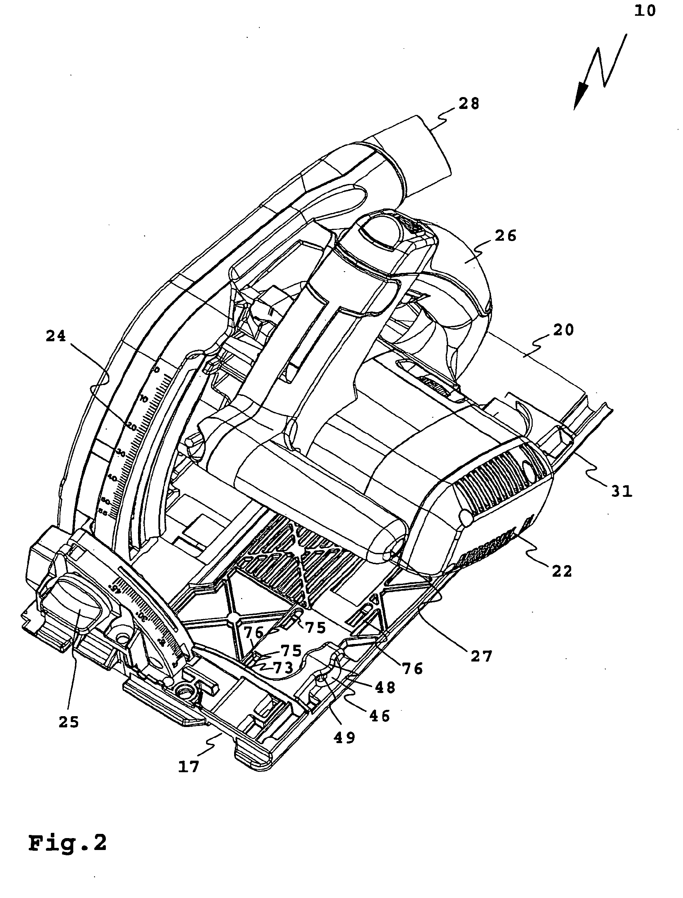

- Figur 2: die Hand-Werkzeugmaschine gemäß Figur 1 in perspek- tivischer Ansicht, jedoch schräg von oben,

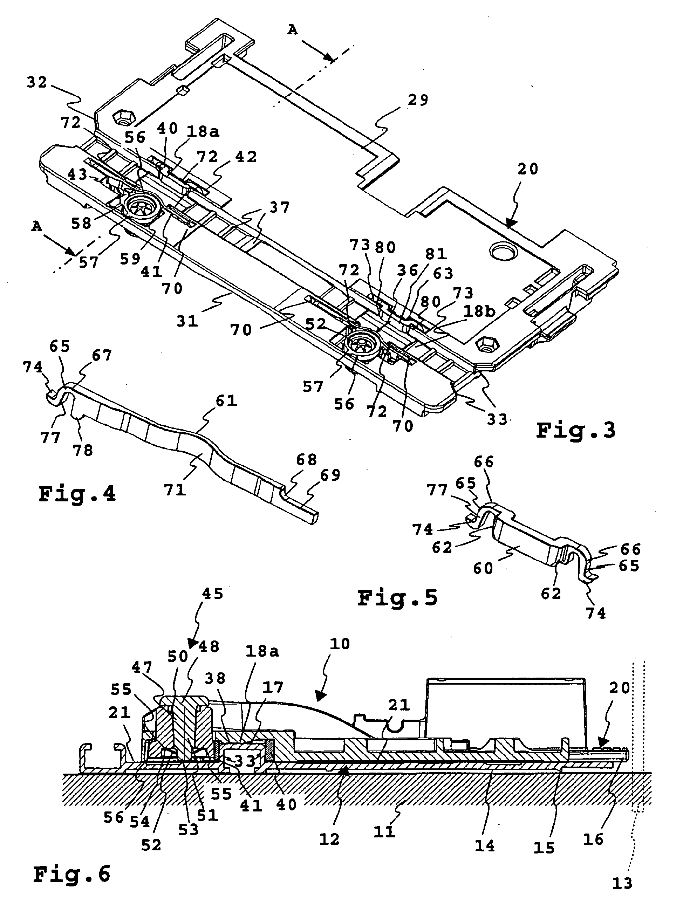

- Figur 3: eine Führungsplatte der Hand-Werkzeugmaschine gemäß Figuren 1 und 2 schräg von unten,
- Figur 4: ein Gleitwandungsteil und
- Figur 5: ein Gleitstück der in Figur 3 dargestellten Füh- rungsplatte, und
- Figur 6: eine Schnittdarstellung der Führungsplatte gemäß Figur 3 entlang einer Schnittlinie A-A, wobei die Führungsplatte auf eine Führungsschiene aufgesetzt ist, die auf einem Werkstück aufliegt.

Eine Hand-Werkzeugmaschine 10 beispielsweise eine Kreissäge, insbesondere eine Tauch-Kreissäge, ist zur Bearbeitung eines Werkstücks 11, beispielsweise einer Holzplatte, einem Brett oder dergleichen entlang einer Führungsschiene 12 führbar.
Dadurch können mit einem Sägeblatt 13 exakte Schnitte in dem Werkzeug 11 durchgeführt werden. Die Führungsschiene 12 ist beispielsweise auf das Werkstück 11 auflegbar. An einer Unterseite 14 kann ein rutschhemmender Belag vorgesehen sein.
Die Führungsschiene 12 liegt beispielsweise mit Auflagevorsprüngen 15, die vor die Unterseite 14 vorstehen auf dem Werkstück 11 auf. Das Sägeblatt 13 sägt beim Führen der Werkzeugmaschine 10 an der Führungsschiene 12 entlang an einer Seitenkante 16 der Führungsschiene 12 entlang. An der Seitenkante 16 kann ein Splitterschutz angeordnet sein, beispielsweise aus Kunststoff oder Gummi.

Beim Führen der Werkzeugmaschine 10 an der Führungsschiene 12 entlang greift ein Führungsvorsprung 17 der Führungsschiene 12 in Führungszwischenräume 18a, 18b an einer Führungsnut 19 einer Führungsplatte 20 der Werkzeugmaschine 10 ein. Die Führungsplatte 20 liegt dabei auf einer Oberseite 21 der Führungsschiene 12 zumindest teilweise flächig auf.

Die Führungsplatte 20 bildet eine Tragplatte für weitere Komponenten der Werkzeugmaschine 10, beispielsweise ein Antriebsaggregat 22 mit einem in der Zeichnung nicht dargestellten über beispielsweise Akkumulatoren oder ein Kabel 23 mit elektrischem stromversorgbaren Elektromotor. Das Antriebsaggregat 22, das zum Antreiben des Sägeblattes 13 dient, ist beweglich mit der Führungsplatte 20 verbunden. Beispielsweise kann mit einer tiefen Einstelleinrichtung 24 eine maximale Sägetiefe eingestellt werden. Mit Hilfe einer Schrägstelleinrichtung 25 kann die Neigung des Sägeblatts 13 bezüglich der Führungsplatte 20 verstellt werden, sodass Schrägschnitte in einem an der Schrägstelleinrichtung 25 eingestellten Winkel möglich sind. Die Werkzeugmaschine 10 kann zum Führen entlang der Führungsschiene 12 an Handgriffen 26 und 27 bequem ergriffen werden. Beim Sägen anfallender Sägestaub kann über eine Absauganschluss 28 abgesaugt werden.

Zwar wäre es möglich, die Führungsplatte 20 als ein von der Werkzeugmaschine 10 abnehmbares Bauteil auszugestalten, sodass sie beispielsweise eine Art Adapterplatte für die Nutzung mit der Führungsleiste 12 darstellt. Bei der Hand-Werkzeugmaschine 10 ist jedoch eine andere Bauform getroffen. Die Führungsplatte 20 ist nämlich dauerhaft an der Werkzeugmaschine 10 befestigt und wird allenfalls im Reparaturfall ausgetauscht. Bei normalem Gebrauch tritt jedoch an der Führungsplatte 20 so wenig Verschleiß auf, dass sie in der Regel nicht ausgetauscht werden muss. Dazu sind die nachfolgend erläuterten erfindungsgemäßen Maßnahmen vorteilhaft.

Die Führungsnut 19 verläuft an der in Gebrauchslage der Führungsschiene 12 zugewandten Unterseite 29 der Führungsplatte 20 parallel zum Sägeblatt 13. Das Sägeblatt 13 steht nach unten vor die Unterseite 29 der Führungsplatte 20 bei Gebrauch der Werkzeugmaschine 10 an einer ersten Längsseite 30 der Führungsplatte 20 vor. Die Führungsnut 20 verläuft im Bereich einer zweiten Längsseite 31 der Führungsplatte 20. Somit sind das Sägeblatt 13 und die Führungsnut 19 im Bereich einander entgegengesetzter Längsseiten 30, 31 angeordnet. Die Führungszwischenräume 18a, 18b sind in Längsrichtung der Führungsplatte 20 zueinander beabstandet. In Arbeitsrichtung der Werkzeugmaschine 10 beim Führen entlang der Führungsschiene 12 ist der Führungszwischenraum 18a vorn und der Führungszwischenraum 18b hinten.

Wird nun die Werkzeugmaschine 10 auf die Führungsschiene 12 aufgesetzt, was durch Einführschrägen 32 an den vorderen und hintern Enden der Führungsnut 19 erleichtert ist, liegen Seitenwände 33 des Führungsvorsprungs 17 an feststehenden Führungswänden 34 einerseits und verstellbaren Führungsflächen 35 andererseits der Führungsnut 19 im Bereich der Führungszwischenräume 18a, 18b an.

Ein sich in Querrichtung erstreckender Abstand 36 zwischen den Führungswänden 34 und den Führungsflächen 35 ist durch Verstellung der Führungsfläche 35 variabel, sodass die Breite der Führungsnut 19 in den Führungszwischenräumen 18a, 18b zur Einstellung eines gewünschten Führungsspiels veränderbar ist.

An der Bodenseite der Führungsnut 19 sind Rippen 37 vorgesehen Zwischen den Rippen 37 und einer Stirnwandung 38 des Führungsvorsprungs 17 ist vorzugsweise ein Abstand vorhanden. Eine Unterseite 29 der Führungsplatte 20 kann beispielsweise flächig auf der Führungsschiene 12 aufliegen. Vorteilhaft für eine kippsichere Auflage der Führungsplatte 20 auf der Führungsschiene 12 ist es jedoch, dass die Führungsplatte 20 vor eine mittlere Fläche 91 vorstehende Auflageflächen 90 aufweist, z.B. Randbereiche 92 und Stützflächen 93 neben der Führungsnut 19 und Stützflächen 94 neben dem Sägeblatt 13.

Die Führungswand 34 und die Führungsfläche 35 gleiten beim Führen der Werkzeugmaschine 10 entlang des Führungsvorsprungs 17 an den Seitenwänden 33 entlang. Somit ist dort die mechanische Beanspruchung der Führungsnut 19 am größten.

Erfindungsgemäß werden bei der Werkzeugmaschine 10 mechanisch beanspruchte Gleitflächen, nämlich die Führungswand 34 und die Führungsfläche 35, durch auswechselbare Bauteile bereitgestellt, die im Verschleißfall leicht auswechselbar sind.

Die feststehende Führungswand ist durch ein Gleitstück 40 gebildet, das an der Führungsplatte 20 lösbar befestigt ist. Die bewegliche, verstellbare Führungsfläche 35 hingegen ist an einem Gleitwandungsteil 41 vorgesehen. Das Gleitstück 40 und das Gleitwandungsteil 41 sind werkzeuglos montierbar. Die beiden Komponenten können von der Unterseite 29 der Führungsplatte 20 her in die Halteaufnahmen 42, 43 eingesetzt und sozusagen eingeclipst werden.

Die Gleitstücke 40 werden zweiseitig durch Hakenverbindungen gehalten, während die Gleitwandungsteile 41 nur an einer Seite ortsfest durch Haken-/Rastverbindungen ortsfest gehalten sind und an einem anderen Längsende gleitverschieblich gelagert sind. Die Gleitwandungsteile können somit ein Verstellspiel mitmachen, dass durch Verdrängerkörper 44 von Verstelleinrichtung 45 zur Verstellung der Abstände 36 der Führungszwischenräume 18a, 18b ausübbar ist.

Die Verdrängerkörper 44 werden durch Stellräder 46 gebildet, die drehbar an der Führungsplatte 20 gelagert sind. Die Stellräder 46 sind an konischen Drehachsteilen 47 der Führungsplatte 20 drehgelagert. Die Drehachsteile 47 stehen zur Unterseite 29 hin von Trägerbügeln 48 ab. Zwischen den Trägerbügeln 48 und der Oberseite der Führungsplatte 20 sind jeweils seitlich Freiräume 49 zum Ergreifen der Stellräder 46 durch einen Bediener vorgesehen. Im Bereich der Freiräume oder Ausnehmungen 49 sind die Stellräder 46 zweckmäßigerweise geriffelt.

Die Verdrängerkörper 44 bzw. Stellräder 46 haben eine konische Lagerausnehmung 50, die auf Lagerdomen 51 der Drehachsteile 47 drehbar gelagert sind. Die Stellräder 46 werden durch Klemmringe 52 gehalten, die auf Vorsprünge 53 der Lagerdome 51 aufgesteckt sind. Die Klemmringe 52 bilden Spannteile, die die Verdrängerkörper 44 gegen die Drehachsteile 47 unter Erzeugung eines Reibungswiderstandes spannen. Die Reibung entsteht beispielsweise zwischen Lagerausnehmungen 50 und den Lagerdomen 51 sowie ferner zwischen radial äußeren Stützflächen 54 der Klemmringe 52 und den drehbaren Stellrädern 46. Die Klemmringe 52 halten nämlich vorzugsweise drehfest an den Lagerdomen 51 bzw. deren Vorsprünge 53, wobei die Stützflächen 54 gegen Bodenseiten 55 von Ausnehmungen an der Unterseite der Stellräder 46 zur Aufnahme der Klemmringe 52 gespannt sind. Die Klemmringe 52 sind konisch, wobei der Konusmittenbereich oder Spitzenbereich am Vorsprung 53 im Klemmsitz anliegt.

Am Außenumfang der Verdrängerkörper 44 ist eine Exzentrität 56 vorgesehen, die auf die Gleitwandungsteile 41 wirkt. Durch Drehen der Verdrängerkörper 44, die insoweit Exzenterelemente bilden, verdrängen radial weiter oder weniger weit vor die durch das Drehachsteil 47 definierte Drehachse der Verdrängerkörper 44 vorstehende Abschnitte der Exzentrität 56 die Gleitwandungsteile 41 in Richtung der Führungszwischenräume 18a, 18b, sodass deren Abstände 36 durch Drehen der Stellräder 46 einstellbar sind. Ein Drehanschlag 47 der Stellräder 46 begrenzt den Drehweg der Stellräder 46. Der Drehanschlag 47 schlägt an Drehendanschlägen 58, 59 am jeweiligen Ende des Drehweges an. Der Drehanschlag 47 steht radial vor die Stellräder 46, zweckmäßigerweise im Bereich der Exzentrität 56, vor.

Die Gleitstücke 40 und die Gleitwandungsteile 41 haben zu den Führungszwischenräumen 18a, 18b hin vorstehende Gleitabschnitte 60, 61. Die Gleitabschnitte 60 bilden die feststehenden Führungswände 34, die durch die Verdrängerkörper 44 einstellbaren Gleitabschnitte 61 hingegen die verstellbaren Führungsflächen 35. Der Führungsvorsprung 17 gleitet an den Gleitabschnitten 60, 61 entlang.

Die Gleitabschnitte 60 sind als eine Art Gleitbacken ausgestaltet. Neben den Gleitabschnitten 60 sind Stützanschläge 62 vorhanden, die sich an Stützgegenanschlägen der Führungsplatte 20 abstützen. Die Anschläge und Gegenanschläge 62, 63 sind quer zur Längsrichtung der Führungsplatte 20 orientiert, sodass beim Bewegen der Führungsplatte 20 entlang des Führungsvorsprungs 17 entstehende Kräfte von den Anschlägen 62, 63 aufgenommen werden. Die Gleitabschnitte 60, die durch einen Mittelabschnitt der Gleitstücke 41 gebildet sind, werden durch Stützvorsprünge 64 an den Halteaufnahmen 42 rückseitig unterstützt, sodass die Gleitabschnitte 60 bezüglich der Führungszwischenräume 18a, 18b feststehend sind. Zweckmäßigerweise sind die Längsenden der Gleitabschnitte 60 abgeschrägt, sodass der Führungsvorsprung 17 leicht auf die Gleitabschnitte 60 aufgleitet.

Die Gleitstücke 40 haben an ihren beiden Längsendbereichen 66, die Gleitwandungsteile 41 nur an einem Längsendbereich 67 Rasthaken 65 zum Verrasten mit den Halteaufnahmen 42, 43. An den den Längsendbereichen 67 entgegengesetzten Längsendbereichen 68 haben die Gleitwandungsteile 41 Steckvorsprünge 69, die in Steckaufnahmetaschen 70 der Halteaufnahmen 43 eingesteckt sind. Die Längsendbereiche 68 sind in den Steckaufnahmetaschen 70 mit Längsspiel längsbeweglich gelagert, das für das Verdrängen mittels der Verdrängerkörper 44 erforderlich ist.

Mittlere Abschnitte 71 der Gleitwandungsteile 41 sind korrespondierend mit der Exzentrität bzw. dem im Wesentlichen runden Außenumfang der Exzenterverdrängerkörper 44 bauchig oder ausgerundet. Im montierten Zustand stehen die mittleren Abschnitte 71 zu den Führungszwischenräumen 18a, 18b hin vor und werden durch Haltevorsprünge 72 der Halteaufnahmen 43 neben den Verdrängerkörpern 44 gehalten. Die Haltevorsprünge 72 stützen die Abschnitte 71 gegen die Kraftwirkung der Exzentritäten 56 ab. Zwischen den Haltevorsprüngen 72 ist ein Freiraum vorhanden, durch den hindurch die Gleitwandungsteile 41 mit ihren mittleren Abschnitten 71 zu den Führungszwischenräumen 18a, 18b vorstehen.

Die Rasthaken 65 sind in Hakenaufnahmen 73 von der Unterseite 29 her eingehakt. Im montierten Zustand stützen sich die Hakenvorsprünge 74 der Rasthaken 65 an Stützflächen 75 der Hakenaufnahmen 73 ab. Im Bereich der Stützflächen 75 sind die Hakenaufnahmen 73 von der Oberseite der Führungsplatte 20 her zugänglich. Dort sind Öffnungen 76 vorgesehen, sodass die Hakenvorsprünge 74 von der Oberseite der Führungsplatte 20 her ergriffen werden können, beispielsweise mit einem Schraubendreher oder einem sonstigen Werkzeug mit einer schmalen Spitze. Dann können federnde Arme 77 der Rasthaken 65 aus den Rastaufnahmen 73 heraus betätigt werden, sodass die Gleitstücke 40 und die Gleitwandungsteile 41 aus den Halteaufnahmen 42 oder 43 sozusagen herausspringen. Somit gestaltet sich die Demontage der Gleitstücke 40 und Gleitwandungsteile 41 ebenso einfach wie deren Montage. Da für die Demontage vorteilhaft ein Werkzeug erforderlich ist, wird ein unbeabsichtigtes Lösen der Gleitstücke 40 und der Gleitwandungsteile 41 verhindert.

Neben den Rasthaken 65 der Gleitwandungsteile 41 sind ferner Stützvorsprünge 78 vorgesehen. Wenn der Verdrängerkörper 44 auf das jeweilige Gleitwandungsteil 41 einwirkt, stützt sich der jeweilige Stützvorsprung 78 an einem entsprechenden, in der Zeichnung nicht sichtbaren Gegenanschlag der Halteaufnahme 43 ab und begrenzt somit Zugkräfte, die an sich sonst auf den Rasthaken 65 wirken würden.

Die Gleitabschnitte 60 stehen in einem Freiraum 81 zwischen Haltevorsprüngen 80 der Halteaufnahmen 42 zur Führungsnut 19 vor Die Gleitstücke 40 sind sozusagen zwischen die Haltevorsprünge 80 und die Stützgegenanschläge 63 geklemmt.

Das Gleitstück und das Gleitwandungsteil 40, 41 bestehen zweckmäßigerweise aus demselben Material, sodass Gleiteigenschaften und Verschleißeigenschaften identisch sind. Die Gleitstücke 40 und Gleitwandungsteile 41 bestehen zweckmäßigerweise aus Kunststoffmaterial, insbesondere aus faserverstärktem Polyamid oder POM.

Die Führungsplatte 20 ist vorzugsweise aus Metall, wobei auch ein belastbares Kunststoffmaterial denkbar ist. Beim Ausführungsbeispiel besteht die Ausführungsplatte 20 beispielsweise aus Leichtmetall, insbesondere aus Magnesium.

## Patentansprüche

1. Hand-Werkzeugmaschine mit einer Führungsplatte (20) zum Führen der Hand-Werkzeugmaschine (10) an einem Führungsvorsprung (17) einer ortsfesten Führungsvorrichtung, wobei der Führungsvorsprung (17) bei dem Führen in einen Führungszwischenraum (18a, 18b) an der Führungsplatte (20) eingreift, so dass die Hand-Werkzeugmaschine (10) auf den Führungsvorsprung (17) aufsetzbar und an dem Führungsvorsprung (17) entlang zur Bearbeitung eines Werkstücks (11) entlang führbar ist, wobei der Führungszwischenraum (18a, 18b) eine feststehende Führungswand (34) und eine relativ zu der feststehenden Führungswand (34) durch eine Verstelleinrichtung (45) verstellbare Führungsfläche (35) aufweist, so dass eine Breite des Führungszwischenraums (18a, 18b) zur Anpassung an eine Breite des Führungsvorsprungs (17) einstellbar ist, **dadurch gekennzeichnet, dass** die feststehende Führungswand (34) zumindest in einem der verstellbaren Führungsfläche (35) gegenüberliegenden Bereich durch ein an der Führungsplatte (20) lösbar befestigtes Gleitstück (40) gebildet ist, und dass das Gleitstück (40) und/oder ein auswechselbares Gleitwandungsteil (41), durch das die verstellbare Führungsfläche (35) gebildet ist, mindestens einen Haken (65) zum Verhaken mit einer Hakenaufnahme (73) der Führungsplatte (20) aufweisen.

2. Hand-Werkzeugmaschine nach Anspruch 1, **dadurch gekennzeichnet, dass** das Gleitstück (40) werkzeuglos montierbar und/oder demontierbar ist.

3. Hand-Werkzeugmaschine nach Anspruch 1 oder 2, **dadurch gekennzeichnet, dass** der mindestens eine Haken (65) federnd ist.

4. Hand-Werkzeugmaschine nach einem der vorhergehenden Ansprüche, **dadurch gekennzeichnet, dass** die Hakenaufnahme (73) an einer Oberseite der Führungsplatte (20) offen ist, so dass der mindestens eine Haken (65) zum Lösen von der Oberseite der Führungsplatte (20) zugänglich ist.

5. Hand-Werkzeugmaschine nach einem der vorhergehenden Ansprüche, **dadurch gekennzeichnet, dass** das Gleitstück (40) und/oder das Gleitwandungsteil (41) durch eine Rastverbindung an der Führungsplatte (20) befestigbar ist.

6. Hand-Werkzeugmaschine nach einem der vorhergehenden Ansprüche, **dadurch gekennzeichnet, dass** das Gleitstück (40) und/oder das Gleitwandungsteil (41) im Klemmsitz an der Führungsplatte (20) gehalten sind.

7. Hand-Werkzeugmaschine nach einem der vorhergehenden Ansprüche, **dadurch gekennzeichnet, dass** das Gleitstück (40) und das Gleitwandungsteil (41) zumindest in ihrem jeweiligen Gleitbereich aus demselben Material sind.

8. Hand-Werkzeugmaschine nach einem der vorhergehenden Ansprüche, **dadurch gekennzeichnet, dass** das Gleitstück (40) und/oder das Gleitwandungsteil (41) aus Kunststoff bestehen.

9. Hand-Werkzeugmaschine nach Anspruch 8, **dadurch gekennzeichnet, dass** der Kunststoff faserverstärkt ist.

10. Hand-Werkzeugmaschine nach Anspruch 8 oder 9, **dadurch gekennzeichnet, dass** der Kunststoff gleitmodifiziert ist.

11. Hand-Werkzeugmaschine nach einem der vorhergehenden Ansprüche, **dadurch gekennzeichnet, dass** das Gleitstück (40) und/oder das Gleitwandungsteil (41) mit einer Gleitbeschichtung versehen sind.

12. Hand-Werkzeugmaschine nach einem der vorhergehenden Ansprüche, **dadurch gekennzeichnet, dass** das Gleitstück (40) und/oder das Gleitwandungsteil (41) einen zu dem Führungszwischenraum (18a, 18b) hin vorstehenden Gleitabschnitt (60, 61) aufweisen.

13. Hand-Werkzeugmaschine nach Anspruch 12, **dadurch gekennzeichnet, dass** neben dem Gleitabschnitt (60, 61) mindestens ein quer zum Gleitabschnitt (60, 61) verlaufender Stützanschlag (62) vorhanden ist, der sich im montierten Zustand an einem Stützgegenanschlag (63) an der Führungsplatte (20) abstützt.

14. Hand-Werkzeugmaschine nach einem der Ansprüche 1 bis 13, **dadurch gekennzeichnet, dass** das Gleitwandungsteil (41) elastisch durch einen Verdrängerkörper (44) der Verstelleinrichtung (45) verformbar ist.

15. Hand-Werkzeugmaschine nach einem der Ansprüche 1 bis 14, **dadurch gekennzeichnet, dass** der Gleitabschnitt (60, 61) des Gleitwandungsteils (41) mit dem Verdrängerkörper (44) korrespondierend gerundet ist.

16. Hand-Werkzeugmaschine nach einem der Ansprüche 1 bis 15, **dadurch gekennzeichnet, dass** die Führungsplatte (20) eine Steckaufnahmetasche (70) für einen Steckvorsprung (69) des Gleitwandungsteils (41) aufweist, wobei der Steckvorsprung (69) in der Steckaufnahmetasche (70) abhängig von der elastischen Verformung des Gleitwandungsteils (41) durch das Verdrängen durch den Verdrängerkörper (44) gleitend gelagert ist.

17. Hand-Werkzeugmaschine nach einem der Ansprüche 14 bis 16, **dadurch gekennzeichnet, dass** der Verdrängerkörper (44) eine Exzentrität (56) aufweist und/oder exzentrisch gelagert ist.

18. Hand-Werkzeugmaschine nach einem der Ansprüche 14 bis 17, **dadurch gekennzeichnet, dass** der Verdrängerkörper (44) an einem Drehachsteil (47) drehbar gelagert ist.

19. Hand-Werkzeugmaschine nach Anspruch 18, **dadurch gekennzeichnet, dass** das Drehachsteil (47) konisch ist, und dass der Verdrängerkörper (44) durch ein Spannteil an dem Drehachsteil (47) gehalten ist, das den Verdrängerkörper (44) zur Erzeugung eines Reibungswiderstandes gegen das Drehachsteil (47) spannt.

20. System, das eine Hand-Werkzeugmaschine nach einem der vorhergehenden Ansprüche und eine Führungsschiene (12) umfasst, wobei die Führungsschiene (12) mit ihrer Unterseite (14) auf ein Werkstück (11) auflegbar ist, und wobei ein Führungsvorsprung (17) an einer Oberseite der Führungsschiene (12) angeordnet ist.

## Claims

1. Hand-operated power tool with a guide plate (20) for the guidance of the hand-operated power tool (10) on a guide projection (17) of a stationary guidance fixture, wherein during guidance the guide projection (17) engages in a guide interspace (18a, 18b) on the guide plate (20), so that the hand-operated power tool (10) may be mounted on the guide projection (17) and may be guided along the guide projection (17) to machine a workpiece (11), wherein the guide interspace (18a, 18b) has a fixed guide wall (34) and a guide surface (35) adjustable by means of an adjusting device (45) relative to the fixed guide wall (34), so that a width of the guide interspace (18a, 18b) may be adjusted to match a width of the guide projection (17), **characterised in that** the fixed guide wall (34) is formed, at least in an area opposite the adjustable guide surface (35), by a sliding block (40) releasably fastened to the guide plate (20), and that the sliding block (40) and/or an interchangeable sliding wall element (41), through which the adjustable guide surface (35) is formed, have/has a hook (65) for hooking up to a hook holding fixture (73) of the guide plate (20).

2. Hand-operated power tool according to claim 1, **characterised in that** the sliding block (40) may be fitted or removed without tools.

3. Hand-operated power tool according to claim 1 or 2, **characterised in that** the hook or hooks (65) is or are sprung.

4. Hand-operated power tool according to any of the preceding claims, **characterised in that** the hook holding fixture (73) is open at an upper side of the guide plate (20), so that the hook or hooks (65) is or are accessible for releasing from the upper side of the guide plate (20).

5. Hand-operated power tool according to any of the preceding claims, **characterised in that** the sliding block (40) and/or the sliding wall element (41) may be attached to the guide plate (20) by means of a snap-in connection.

6. Hand-operated power tool according to any of the preceding claims, **characterised in that** the sliding block (40) and/or the sliding wall element (41) are held to the guide plate (20) in a clamp fit.

7. Hand-operated power tool according to any of the preceding claims, **characterised in that** sliding block (40) and/or the sliding wall element (41) are made of the same material, at least in their respective sliding areas.

8. Hand-operated power tool according to any of the preceding claims, **characterised in that** the sliding block (40) and/or the sliding wall element (41) are made of plastic.

9. Hand-operated power tool according to claim 8, **characterised in that** the plastic is fibre-reinforced.

10. Hand-operated power tool according to claim 8 or 9, **characterised in that** the plastic is slide-modified.

11. Hand-operated power tool according to any of the preceding claims, **characterised in that** the sliding block (40) and/or the sliding wall element (41) are provided with an anti-friction coating.

12. Hand-operated power tool according to any of the preceding claims, **characterised in that** the sliding block (40) and/or the sliding wall element (41) have a slide section (60, 61 ) which extends towards the guide interspace (18a, 18b).

13. Hand-operated power tool according to claim 12, **characterised in that** there is provided next to the slide section (60, 61) at least one support stop (62) running at right-angles to the slide section (60, 61) and resting in the assembled state on a support counter stop (63) on the guide plate (20).

14. Hand-operated power tool according to any of claims 1 to 13, **characterised in that** the sliding wall element (41) may be deformed elastically by a displacing member (44) of the adjusting device (45).

15. Hand-operated power tool according to any of claims 1 to 14, **characterised in that** the slide section (60, 61) of the sliding wall element (41) is rounded correspondingly to the displacing member (44).

16. Hand-operated power tool according to any of claims 1 to 15, **characterised in that** the guide plate (20) has a plug locating pocket (70) for a plug projection (69) of the sliding wall element (41), wherein the plug projection (69) is mounted slidably in the plug locating pocket (70) depending on the elastic deformation of the sliding wall element (41) due to displacement by the displacing member (44).

17. Hand-operated power tool according to any of claims 14 to 16, **characterised in that** the displacing member (44) has an eccentricity (56) and/or is eccentrically mounted.

18. Hand-operated power tool according to any of claims 14 to 17, **characterised in that** the displacing member (44) is rotatably mounted on a rotation axis element (47).

19. Hand-operated power tool according to claim 18, **characterised in that** the rotation axis element (47) is conical, and that the displacing member (44) is held on to the pressure sensor (47) by a clamping element which clamps the displacing member (44) to generate frictional resistance against the pressure sensor (47).

20. System comprising a hand-operated power tool according to any of the preceding claims and a guide rail (12), wherein the guide rail (12) may be placed with its underside (14) on a workpiece (11), and wherein a guide projection (17) is provided on an upper side of the guide rail (12).

## Revendications

1. Machine-outil manuelle dotée d'une plaque de guidage (20) pour guider la machine-outil manuelle (10) contre une saillie de guidage (17) d'un dispositif de guidage stationnaire, la saillie de guidage (17) s'engageant pendant le guidage dans un interstice de guidage (18a, 18b) sur la plaque de guidage (20), de sorte que la machine-outil manuelle (10) peut être placée sur la saillie de guidage (17) et guidée le long de la saillie de guidage (17) pour usiner une pièce (11), l'interstice de guidage (18a, 18b) présentant une paroi de guidage stationnaire (34) et une surface de guidage (35) réglable par rapport à la paroi de guidage stationnaire (34) au moyen d'un dispositif de réglage (45), de sorte qu'une largeur de l'interstice de guidage (18a, 18b) peut être réglée pour s'adapter à une largeur de la saillie de guidage (17), **caractérisée en ce que** la paroi de guidage stationnaire (17) est formée au moins dans une zone opposée à la surface de guidage réglable (35) par un élément coulissant (40) fixé de façon amovible sur la plaque de guidage (20), et **en ce que** l'élément coulissant (40) et/ou une partie de paroi coulissante interchangeable (41), qui forme la surface de guidage réglable (35), présente au moins un crochet (65) pour s'accrocher dans un logement de crochet (73) de la plaque de guidage (20).

2. Machine-outil manuelle selon la revendication 1, **caractérisée en ce que** l'élément coulissant (40) peut être monté et/ou démonté sans outil.

3. Machine-outil manuelle selon la revendication 1 ou 2, **caractérisée en ce que** le crochet (65) au nombre d'au moins un est élastique.

4. Machine-outil manuelle selon l'une des revendications précédentes, **caractérisée en ce que** le logement de crochet (73) est ouvert au niveau d'une surface supérieure de la plaque de guidage (20), de sorte que le crochet (65) au nombre d'au moins un est accessible pour une libération depuis la face supérieure de la plaque de guidage (20).

5. Machine-outil manuelle selon l'une des revendications précédentes, **caractérisée en ce que** l'élément coulissant (40) et/ou la partie de paroi coulissante (41) peu(ven)t être fixé(e)(s) sur la plaque de guidage (20) par un assemblage cranté.

6. Machine-outil manuelle selon l'une des revendications précédentes, **caractérisée en ce que** l'élément coulissant (40) et/ou la partie de paroi coulissante (41) est/sont tenu(e)(s) en ajustement serré sur la plaque de guidage (20).

7. Machine-outil manuelle selon l'une des revendications précédentes, **caractérisée en ce que** l'élément coulissant (40) et la partie de paroi coulissante (41) sont constitués du même matériau au moins dans leurs zones de coulissement respectives.

8. Machine-outil manuelle selon l'une des revendications précédentes, **caractérisée en ce que** l'élément coulissant (40) et/ou la partie de paroi coulissante (41) est/sont constitué(e)(s) de matière plastique.

9. Machine-outil manuelle selon la revendication 8, **caractérisée en ce que** la matière plastique est renforcée par des fibres.

10. Machine-outil manuelle selon la revendication 8 ou 9, **caractérisée en ce que** la matière plastique est modifiée pour glisser.

11. Machine-outil manuelle selon l'une des revendications précédentes, **caractérisée en ce que** l'élément coulissant (40) et/ou la partie de paroi coulissante (41) est/sont muni(s) d'un revêtement glissant.

12. Machine-outil manuelle selon l'une des revendications précédentes, **caractérisée en ce que** l'élément coulissant (40) et/ou la partie de paroi coulissante (41) présente(nt) une section de glissement (60, 61) en saillie en direction de l'interstice de guidage (18a, 18b).

13. Machine-outil manuelle selon la revendication 12, **caractérisée en ce qu'**outre la section de glissement (60, 61), au moins une butée de soutien (62) s'étendant transversalement à la section de glissement (60, 61) est présente, qui s'appuie à l'état monté contre une contre-butée d'appui (63) sur la plaque de guidage (20).

14. Machine-outil manuelle selon l'une des revendications 1 à 13, **caractérisée en ce que** la partie de paroi coulissante (41) est déformable élastiquement par un corps de refoulement (44) du dispositif de réglage (45).

15. Machine-outil manuelle selon l'une des revendications 1 à 14, **caractérisée en ce que** la section de glissement (60, 61) de la partie de paroi coulissante (41) est arrondie d'une manière correspondant au corps de refoulement.

16. Machine-outil manuelle selon l'une des revendications 1 à 15, **caractérisée en ce que** la plaque de guidage (20) présente une poche réceptrice d'enfichage (70) pour une saillie d'enfichage (69) de la partie de paroi coulissante (41), la saillie d'enfichage (69) étant montée coulissante dans la poche réceptrice d'enfichage (70) en fonction de la déformation élastique de la partie de paroi coulissante (41), du fait du refoulement par le corps de refoulement (44).

17. Machine-outil manuelle selon l'une des revendications 14 à 16, **caractérisée en ce que** le corps de refoulement (44) présente une excentricité (56) et /ou est monté de manière excentrique.

18. Machine-outil manuelle selon l'une des revendications 14 à 17, **caractérisée en ce que** le corps de refoulement (44) est monté mobile sur une partie formant axe de rotation (47).

19. Machine-outil manuelle selon la revendication 18, **caractérisée en ce que** la partie formant axe de rotation (47) est conique et **en ce que** le corps de refoulement (44) est tenu sur la partie formant axe de rotation (47) par une partie de serrage qui serre le corps de refoulement (44) contre la partie formant axe de rotation (47) afin de produire une résistance par frottement.

20. Système comprenant une machine-outil manuelle selon l'une des revendications précédentes et un rail de guidage (12), dans lequel le rail de guidage (12) peut être appliqué avec sa face inférieure (14) sur une pièce (11), et dans lequel une saillie de guidage (17) est placée sur une face supérieure du rail de guidage (12).
